# EUROPEAN PATENT APPLICATION

(11) **EP 0 915 247 A1**
(43) Date of publication of application: **12.05.1999**
(21) Application number: 96937600.3
(22) Date of filing: 22.07.1996
(51) Int. Cl.: F02M 21/02, F02M 13/08, F02D 19/02, F02B 69/02

(54) **SUPPLY SYSTEM FOR INTERNAL COMBUSTION ENGINES**

(71) Applicant: Chumakov, Alexandr Vasilievich, Nizhny Novgorod, 603158 (RU)
(72) Inventor: Chumakov, Alexandr Vasilievich, Nizhny Novgorod, 603158 (RU)
(74) Representative: Kidd, Piers Burgess
(86) International application number: RU9600199
(87) International publication number: WO9803786

(57) **Abstract**

The present invention pertains to the construction of motor machines and relates to a device comprising a supply system for internal combustion engines. This device may be used to increase the gaseous fuel proportion in the fuel mixture and comprises a liquid-fuel supply system as well as a gaseous-fuel supply system. The gaseous-fuel supply system comprises a gas tank (14) fitted with a filling device (13), a multistage filter (15), a heater (16), a single-stage reducer (18), a valve (19) with a control circuit (20), and a controlled distribution unit (21) connected to the suction manifold (9) of the engine (10). This supply system may be used in any internal combustion engine.

## Description

### Field of the Invention

The invention relates to power-plant engineering and in particular, to internal combustion engines, and more specifically, it concerns with a fuel system for an internal combustion engine.

### State of the Prior Art

A fuel system is known in the prior art to be used in a carburettor internal combustion engine, said system comprising a fuel tank and gas cylinders communicated by means of a pipeline having a multistage gas pressure reducer with an economizer system provided with a supplementary fuel jet and a solenoid-operated valve having a spool, and a carburettor-mixer having a main metering system provided additionally with a fuel jet and a solenoid-operated valve having a shutoff element (SU, A, No. 1370279).

This fuel system of prior art knowledge suffers a principal disadvantage consisting in the use of a pressure reducer which is complicated both in the manufacture and for adjustment - a factor which leads to its limited service life.

An engineering solution is also known in the prior art, wherein a fuel system for an internal combustion engine is disclosed (SU, A, No. 1607692), said system comprising a liquid fuel feeding circuit having a main fuel jet and a main air jet, and a gaseous fuel feeding circuit having a gas cylinder.

This fuel system of an internal combustion engine according to SU, A, No. 1607692 suffers a principal disadvantage consisting in that no more than 5-7% of gaseous fuel can be added to combustible mixture, since adding it in greater amounts will require an increase of pressure in the gas pipeline - a factor which, in the absence of a heater, will lead to freezing of the gas pipeline and to making the engine's fuel system inoperative during defrosting.

In addition to this, the fuel system according to SU, A, No. 1607692 suffers a further disadvantage consisting in that saving of liquid fuel is insignificant because of the fact that the flow section of the air jet is increased by 8-12%, whereas the flow section of the main fuel jet is decreased by the same amount. As a result, gaseous fuel when added to a large quantity of leaned gasoline-air mixture, is used only in small quantities. An increase in gas pressure higher than 0.002-0.003 MPa will cause overenrichment of combustible mixture.

The insignificant replacement of liquid fuel by gaseous fuel does not allow also to reduce substantially toxicity of exhaust gases.

### Disclosure of the Invention

It is an object of the invention to provide a fuel system for an internal combustion engine which would allow to increase substantially the share of gaseous fuel in the combustible mixture and, along with this, would ensure trouble-free operation of the engine at all duties.

The above object is accomplished owing to that in a fuel system of an internal combustion engine, said system comprising a liquid fuel feeding circuit having a main fuel jet and a main air jet, and a gaseous fuel feeding circuit having a gas cylinder, according to the invention, the gas cylinder is provided with a means for taking off the liquid phase of gaseous fuel, wherein the gaseous fuel feeding circuit comprises, all arranged downstream the gas cylinder one after another, a filter, a heater, an adjustable gas pressure reducer, a shutoff valve having a control circuit, and a controllable distributing unit communicated with an intake manifold of the engine.

It is preferable for the controllable distributing unit to have one outlet thereof communicated with an idling passage and to include a transient-duty and medium-load valve having an outlet thereof connected to the intake manifold of the engine through a tee-joint with a jet, and a maximum-load valve having an outlet thereof connected to the intake manifold of the engine through the other elbow of the tee-joint.

It is desirable for the gas cylinder to be provided with a charging device comprising two locking valves for gaseous and liquid phases, said valves being located in the vicinity of upper and lower generatrices of the cylindrical surface of the cylinder so as to allow thereby to make use of both phases of the gaseous fuel - liquid and gaseous - wherein, when using the gaseous phase, there is a possibility of utilizing the gas cylinder as a refrigerator.

When operating with the liquid phase, the feed of gaseous fuel is carried out practically at constant pressure until it is used up completely, and quality of the fuel does not vary in the process.

It is possible to make the pressure reducer single-stage and of membrane type.

In case when the pressure reducer is of membrane type, it is desirable to make the membrane from an oil and gasoline resistant rubber of 2-5 mm in thickness, thus improving operational reliability of the membrane.

The distinctive attributes of the pressure reducer consist in simplicity of its design, low cost and long service life.

It is desirable for the heating surface area of the liquid phase of gas fuel in the heater to amount to as much as (7.0 ± 1.0) · 10⁻³ m².

To ensure better removal of impurities from liquid fuel, it is advisable to use a multistage filter.

The fuel system of an internal combustion engine, if made in accordance with the present invention, ensures improvement in homogeneity of the mixture, improvement in the antiknock value of the engine, production of high-octane combustible mixture while using a low-octane liquid fuel, reduction in consumption oil liquid fuel by as much as up to 50%, reduction in the content of toxic components in exhaust gases down to 10 times as low as the ultimate allowable limit thereof, improvement in service life of the engine and attainment of supercharging effect without the use of any supplementary devices.

Using the liquid phase of fuel gas (liquefied petroleum gases) allows to utilize the fuel gas 100% - a factor which eliminates such labour-consuming operations as: 1) periodical dismantling of the gas cylinder; 2) draining the gas condensate off; 3) utilization of the gas condensate; 4) mounting of the gas cylinder; and 5) construction of stations for mounting and dismantling of gas cylinders.

### Brief Description of the Drawings

Hereinafter, the invention will further be described by way of examples illustrating specific embodiment thereof with reference to the accompanying drawings, in which:
Fig. 1 shows a diagram of a fuel system for an internal combustion engine, according to the invention;
Fig. 2 is a cross section of a multistage filter used in the system shown in Fig. 1;
Fig. 3 is a cross section of a heater used in the system shown in Fig. 1; and
Fig. 4 is a cross section of a pressure-operated electrical unit used in the system shown in Fig. 1.

### The Best Mode of Carrying out the Invention

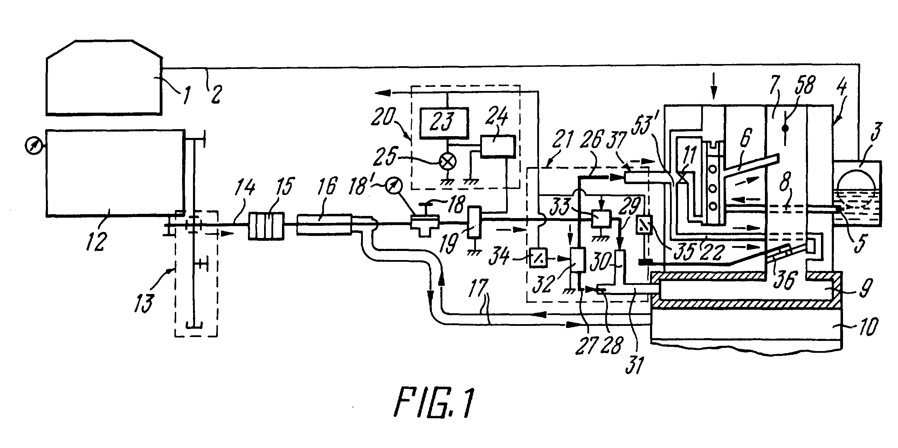

The fuel system of an internal combustion engine shown in Fig. 1 includes a liquid fuel feeding circuit comprising a a gasoline tank 1 connected by a gasoline pipe line 2 through a gasoline feed pump (not shown in the drawing) to a float chamber 3 of a carburettor 4, the float chamber being connected through fuel jets 5 (shown schematically in the drawing is only one jet of a primary chamber) to corresponding nozzles 6 and 7 of primary and secondary chambers (shown schematically in the drawing is only the primary chamber) of the carburettor 4.

The float chamber 3 is also connected to a passage 8 to feed liquid fuel when idling. The passage 8 through which liquid fuel is fed during idling is, in turn, connected to an intake manifold 9 of an engine 10 through a metering orifice 11 of a solenoid-operated valve (not shown in the drawing).

A fuel gas feeding circuit comprises a stationary gas cylinder 12 connected to a charging device 13 and to a main gas pipe line 14. Connected one after another downstream thereof to the main gas pipe line are a filter 15, a heater 16 to which inlet and outlet conduits 17 are connected to ensure the circulation of cooling liquid through the heater 16 from the cooling system of the engine 10.

Connected further downstream to the outlet of the heater 16 is an adjustable gas pressure reducer 18 which is provided with a pressure gauge 18' and is made so that it is a single-stage pressure reducer having a membrane made from an oil and gasoline resistant rubber of (2-5) mm in thickness, and then to a shutoff valve 19 having a control circuit 20.

The shutoff valve 19 is connected through the main gas pipe line 14 to a controllable distributing unit 21 which has one outlet thereof communicated with a passage 22 to feed combustible mixture when idling and another outlet thereof communicated with the intake manifold 9 of the engine 10.

The control circuit 20 comprises a generator relay 23, a a control relay 24 and a signalling lamp 25.

The controllable distributing unit 21 comprises an idling gas pipe line 26 connecting the main gas pipe line to a first outlet of the unit 21, a medium-load gas pipe line 27 connecting the main gas pipe line 14 to a second output of the unit 21 through a jet 28, and a maximum-load gas pipe line 29 connecting the main gas pipe line 14 to the second outlet through an elbow 30 of a tee-joint 31.

The controllable distributing unit 21 includes also a transient-duty and medium-load valve 32 mounted in the gas pipe line 27, a maximum-load valve 33 mounted in the maximum-load gas pipe line 29, as well as microswitches 34 and 35 connected to control inputs of the valves 32 and 33, respectively, and electrically connected to an engine speed control pedal (not shown in the drawing) coupled with a throttle valve 36, and a pressure-operated electrical unit 37 mounted in the gas pipe line 26.

The fuel system, according to the invention, is made such that the cross-sectional areas of the main fuel jets of the carburettor are reduced 2.5-3.5 times and the cross-sectional areas of the main air jets are reduced 4.0-6.0 times as compared with traditional internal combustion engines using a fuel system operating with gasoline-air mixture.

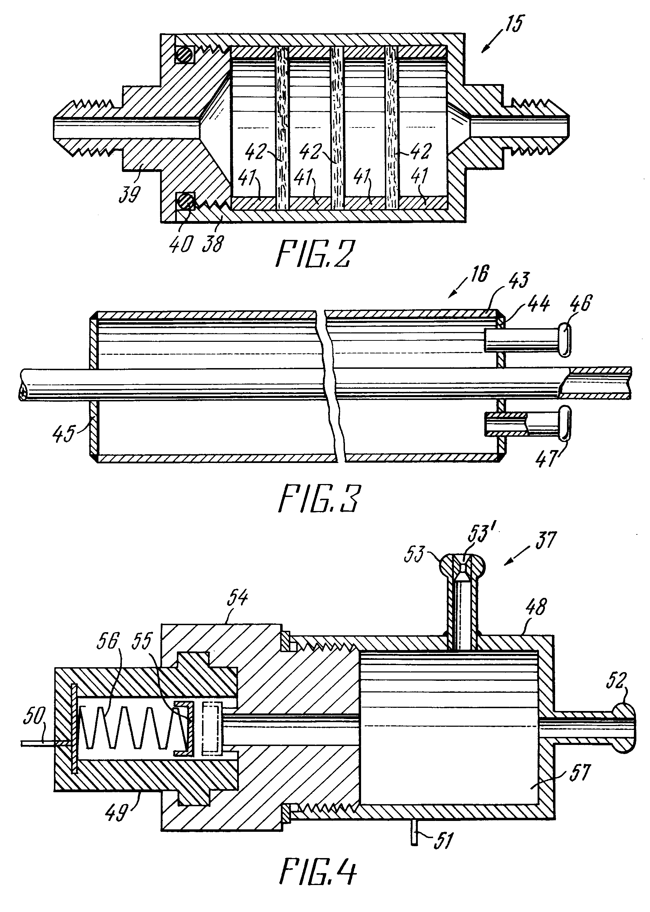

Fig. 2 shows a cross section of the filter 15 which consists of a filter casing 38, covers 39, a sealing ring 40, distance sleeves 41 and filter elements 42.

The multistage filter being included in the fuel gas feeding circuit allows to carry out both coarse and fine cleaning of gases, thus removing impurities therefrom - a factor which guarantees normal operation of the pressure reducer, ensuring meanwhile a 100% utilization of the fuel gas. Accumulation of various impurities in the filter in the form of dry powder (upstream an evaporator) prevents the system from fouling with viscous gummy fractions which can be formed at elevated temperatures of fuel gas.

The filter is cleaned and its serviceability is restored automatically as the locking element is opened in the charging device (with the gas cylinder being disconnected) when the accumulated powdery impurities are blown outside under pressure. So the filter is cleaned by back pressure.

Fig. 3 shows a cross section of the heater 16 which comprises a heater housing 43, covers 44 and 45, inlet and outlet pipe connections 46 and 47 to ensure the circulation of cooling liquid therethrough from the cooling system of the engine. The main gas pipe line 14 extends through the housing 43 of the heater. The heater has a fuel heating surface area of as much as (7.0 ± 1.0) · 10⁻³ m².

The heating surface area for heating up the liquid phase of fuel gas in the heater has been selected such that it is possible to obtain the gaseous phase of fuel gas having such parameters which ensure an optimum composition of combustible mixture.

The heater has a simpler design than the known heaters of this type, and the technology of manufacturing this heater is very simple.

Fig. 4 shows a cross section of the pressure-operated electrical unit which comprises:
a metal body 48, a dielectric body 49, fixed contacts 50 and 51, an inlet union 52, an outlet union 53 having a metering orifice 53', a metal cover 54, a movable contact 55, a spring 56, and a cavity 57 for fuel gas.

The pressure-operated electrical unit of Fig. 4 is designed to cut out or in the solenoid-operated valve of the carburettor, thus ensuring the feed of liquid fuel, when idling through the orifice 11 into the passage 22 for feeding combustible mixture while idling. Voltage is applied to the fixed contact 51. When there is fuel gas under pressure of 0.1-0.2 MPa in the cavity 57, the movable contact 55 is released, the circuit is open between the contacts 50 and 51, no voltage is supplied to the solenoid-operated valve of the carburettor, and it shuts off the feed of liquid fuel into the idling system. With liquid fuel being absent, fuel gas will flow through the union 53 having the metering orifice 53' into the idling passage 22 to ensure stable idling of the engine. When there is no fuel gas in the cavity 57, the spring 56 presses the movable contact 55 against the metal cover 54, and the electric circuit is closed between the contacts 50 and 51. Voltage is then supplied to the solenoid-operated valve of the carburettor, and the valve gets cut in, thus ensuring the feed of liquid fuel into the idling passage 22 through the open metering orifice 11 to ensure thereby normal idling of the engine with gasoline.

This fuel system of the internal combustion engine operates as follows.

### Start-up and Heating of the Engine

With the locking valve of the gas cylinder 12 being open, the liquid phase of fuel gas is fed under pressure of 1.2-1.6 MPa over the main gas pipe line 14 through the multistage filter 15 and the heater 16 where it is heated up to reach essentially the temperature of cooling liquid in the engine, into the adjustable gas pressure reducer 18, by means of which the start-up operating pressure is set which is equal to 0.02-0.1 MPa.

Ignition is switched on, the pedal-controlled throttle valve 36 is slightly opened, the starter is switched on, and the engine 10 is started up. When the engine 10 is started up, the generator which is not shown in the drawing begins to generate voltage which is supplied to the contacts of the generator relay 23 and to the control relay 24. When this occurs, the shutoff valve 19 gets actuated. With the shutoff valve being open, gas will flow simultaneously over the passage 26 through the metering orifice 53' of the pressure-operated electrical unit 37 into the passage 22 and therefrom into the intake manifold 9, and over the gas pipe line 27 through the jet 28 into the intake manifold 9 of the engine 10.

With the throttle valve 36 being open, the microswitch 34 will operate to open the transient-duty and medium-load valve 32, so that fuel will flow over the gas pipe line 27 through the jet 38 of the tee-joint 31 into the space behind the throttle valve in the intake manifold 9.

The fuel system allows to warm up the engine with an open air throttle 58 even at below-zero temperatures.

With the engine 10 warmed up to reach its operating temperature, the heated cooling liquid will flow from the cooling system over the conduit 17 into the heater 16 through the pipe connections 46 and 47, Fig. 3, to transfer the liquid phase of fuel gas into a new consistency state. The pressure reducer 18 will set the operating pressure which is equal to 0.08-0.2 MPa.

### Operation Under Load

With the throttle valve 36 being open, the speed of the engine 10 will increase, vacuum will rise in the space behind the throttle valve in the intake manifold 9, and an enriched gasoline-air mixture will flow into the space behind the throttle valve from the nozzle 6, the quantity of which mixture being several times lower as compared with that of traditional carburettor internal combustion engines, owing to a reduction in the cross-sectional area of the main air jets by as much as 4.0-6.0 times and a reduction in the cross-sectional area of the main fuel jets by as much as 2.5-3.5 times in both chambers.

At the same time, the liquid phase of fuel gas heated up in the heater 16 to reach a predetermined consistency state is fed under pressure of 0.08-0.2 MPa over supplementary gas pipe lines 26 and 27 into the space behind the throttle valve in the intake manifold, where it gets mixed with gasoline-air mixture, thus forming an optimum dual-fuel combustible mixture so that operation of the engine without drops is ensured at all transient modes.

As the throttle valve continues to open (in excess of 30°), the microswitch 35 will operate to open the maximum-load valve 33, so that fuel gas will flow through the tee-joint 31 under pressure of 0.08-0.2 MPa into the space behind the throttle valve, thus enriching additionally combustible mixture.

With the throttle valve open in excess of 48°, the secondary chamber (not shown in the drawing) of the carburettor 4 comes into operation, and this ensures operation of the engine at maximum loads.

If there is no fuel gas, the engine will run on liquid fuel, with the air throttle 58 being partially closed.

### Idling of the Engine

When the engine is idling, the throttle valve 36 is completely closed. Gas will flow over the supplementary gas pipe line 26 through the pressure-operated electrical unit 37. Further on, gas will flow over the passage 22 for feeding combustible mixture at idle where it gets mixed with air into the space behind the throttle valve in the intake manifold 9, thus ensuring stable idling of the engine. As this takes place, the toxicity of exhaust gases decreases considerably.

If there is no gas, the contacts 50 and 51 (Fig. 4) get closed, voltage gets supplied to the solenoid-operated valve which will open, and liquid fuel will pass through the orifice 11 so as to ensure thereby idling of the engine on gasoline.

The disclosed fuel system for engines has the following main advantages:
- reduction in consumption of liquid fuel by as much as up to 50%;
- reduction in the toxicity of exhaust gases 8-10 times (as compared with that of the engines burning gasoline-air mixtures); and
- production of high-octane combustible mixture while using a low-octane liquid fuel.

In addition to this, use made of this system allows to improve service life of the engine and to extend the oil-change period.

The fuel system, according to the present invention, has been tested in a Model VAZ 2106 car. The distance run without refuelling (39 liters of A76 gasoline and 40 liters of propane-butane gas) is ∼ (800-850) km in city service, and ∼ (950-1000) km on highway. Time for standing-start acceleration to a speed of 100 km/hour with a load of ∼ 250 kg (a driver and two passengers) is 14-15 s.

Use made of high-octane combustible mixture (gas + A76) in the fuel system, according to the invention, allows also to increase the ratio of compression in the engines of trucks (from 7 to 9). This factor will contribute to a sharp improvement of ecological situation - it ensures better protection of cities and other inhabited localities against air pollution.

### Industrial Applicability

The fuel system for an internal combustion engine, according to the present invention can be used for the feed of any internal combustion engines, and preferably - for carburettor engines.

## Claims

1. A fuel system of an internal combustion engine,said system comprising a liquid fuel feeding circuit having a main fuel jet and a main air jet, and a fuel gas feeding circuit having a gas cyliner (12), said system being **characterized in that** said gas cylinder (12) is provided with a means for taking off the liquid phase of fuel gas, wherein said fuel gas feeding circuit comprises, all being arranged downstream said gas cylinder one after another, a filter (15), a heater (16), an adjustable gas pressure reducer (18), a shutoff valve (19) having a control circuit, and a controllable distributing unit (21) communicated with an intake manifold (9) of the engine (10).

2. The fuel system of an engine as claimed in claim 1, said system being **characterized** in that said controllable distributing unit (21) has one outlet thereof communicated with a passage (22) for feeding combustible mixture at idle and includes a transient-duty and medium-load valve (32) having an outlet thereof connected to the intake manifold (9) of the engine (10) through a tee-joint (31) with a jet (28), and a maximum-load valve (33) having an outlet thereof connected to the intake manifold (9) of the engine (10) through the other elbow of said tee-joint (31).

3. The system as claimed in claim 1 or claim 2, said system being **characterized** in that said gas cylinder (12) is provided with a charging device (13) comprising two locking valves for the gaseous and liquid phases, said valves being located in the vicinity of upper and lower generatrices of the cylindrical surface thereof.

4. The system as claimed in any one of claims 1, 2 and 3, said system being **characterized** in that said pressure reducer (18) is made as a single-stage pressure reducer of membrane type.

5. The system as claimed in claim 4, said system being **characterized** in that said pressure reducer (18) is of membrane type, and a membrane thereof is made from an oil and gasoline resistant rubber of 2-5 mm in thickness.

6. The system as claimed in any one of the preceding claims, said system being **characterized** in that the heating surface area of the liquid phase of gas fuel in said heater (16) amounts to as much as (7.0 ± 1.0) · 10⁻³m².

7. The system as claimed in any one of the preceding claims, said system being **characterized** in that said filter (15) is made as a multistage filter.
